# EUROPEAN PATENT SPECIFICATION

(11) **EP 2 455 781 B1**
(45) Date of publication and mention of the grant of the patent: **17.05.2017**
(21) Application number: 10014821.2
(22) Date of filing: 22.11.2010
(51) Int. Cl.: G01S 19/36, G01S 19/21

(54) **GNSS receiver**
GNSS-Empfänger
Récepteur GNSS

(43) Date of publication of application: 23.05.2012
(73) Proprietor: Astrium GmbH, 82024 Taufkirchen (DE)
(72) Inventor: Hermsen, Markus, 82194 Gröbenzell (DE)
(74) Representative: Frenkel, Matthias Alexander

(56) References cited:
- WO-A1-2004/040328
- FR-A1- 2 881 581
- US-A- 5 557 284
- US-A- 5 818 389

## Description

The invention relates to a GNSS receiver comprising a first antenna having an omnidirectional characteristic, at least one second antenna having a directional characteristic and a receiver system.

The detection of GNSS (Global Navigation Satellite System) signals is challenging as these signals are of very low power and by this nature deeply hidden in the general noise floor. As picking up such signals under normal conditions is already a technical challenge, identifying and locating the direction out of which such a signal is been transmitted is an even bigger one.

Considering a GNSS signal spoofing scenario where one or more individual transmitters emit a false (spoofed) satellite signal with the intention that the target receiver outputs wrong time and/or location information, in such an attack scenario it is to be expected that the signal strength of the spoofing transmitters at the point of the targeted receiver antenna is only slightly stronger than the regular satellite signal. This will on one side save power so the transmitter operates longer with the same battery and on the other side it makes it much more difficult to locate the transmitter. A maximum satellite signal strength of -130dBm requires a 24dB stronger signal for MBOC (Multiplexed Binary Offset Carrier) Galileo data and a 21 dB stronger signal for BPSK (Binary Phase Shift Keying) GPS data to be blocked. In case of spoofing the malicious signal might be even closer to the original signal in terms of power if the same PRN (Pseudo Random Noise) coding is used. Even if respecting another separation of several dB due to entering the GNSS antenna from a non optimal direction with the jamming/spoofing signal, the total signal is in the range of about -100dBm. This level is extremely low to be analyzed by a device like a spectrum analyzer in order to successfully contribute to a cross-bearing of the transmitter. The situation becomes critical if the malicious signal is not sent out by one single emitter but by a plurality of those which operate individually only in a short burst mode. In such a case conventional means are not suited to locate an individual signal source unless the emitted signal is well above the Noise floor.

US 5,818,389 discloses a GNSS signal locating system. Although this concept uses a P-Code correlation receiver and a C/A-Code correlation receiver simultaneously it is lagging in detection performance as both receiver types need to lock to "a" signal in range before the bearing process might start. This works well in case of having an ideal scenario in which on one side still real GNSS space based signals can be acquired and on the other side a signal transmitter is targeted which is continuously emitting GNSS signals. This concept fails in case that there are multiple signal transmitters in range which each only operate on a very short burst. The concept fails as well in case the false GNSS signal is successfully blocking the acquisition of the true, space based GNSS signals which are required for having a reference signal.

In a similar way the derived patent US 7,193,560 B2 misses these points as the use of two independent GNSS receivers only allows for a sub-optimal, uncorrelated use of both incoming antenna signals.

It is therefore object of the present invention to provide a GNSS receiver which overcomes the problems stated above.

This object is solved by a GNSS receiver according to claim 1. Preferred embodiments are set out in the dependent claims.

The invention provides a GNSS receiver comprising a first antenna having an omnidirectional characteristic, and at least one second antenna having a directional characteristic, wherein the at least one second antenna can be swivelled at least over the entire area covered by the first antenna. The GNSS receiver further comprises a receiver system comprising a first receiver being connected to the first antenna and at least one second receiver being connected to the at least one second antenna, the first and the second receiver being coupled to each other. The receiver system is configured to pointing the at least one second antenna to one specific satellite and comparing an output signal of the second receiver with an output signal of the first receiver. This allows identifying of jamming and spoofing. The receiver system is further configured to scanning over an area with the at least one second antenna while the first antenna keeps track of a valid satellite signal. This configuration allows identifying the direction to even lowest power jamming or spoofing sources. The first antenna is a primary antenna whilest the at least one second antenna is a secondary antenna.

The GNSS receiver according to the invention takes advantage of a closely coupled system of two or more receivers. In such a way the system is able to pick up very weak signals and signals which are only available during short moments. The pre-requisite of prior art solutions that both receivers need a lock to a reference signal (typically the true GNSS open sky signal) and the target signal (an interference, jamming or spoofing source) is not required - not even in the case that both signals are of very low power. According to the suggested invention, only one lock signal is required which typically will be one or more true GNSS signals.

Once this lock is acquired then the close coupling between both, i.e. the first and the second receiver, enables the second receiver for immediate reception as it can be frequency and phase wise coupled to the locked reference receiver.

An additional advantage of the proposed GNSS receiver is that it allows picking up very weak signals far below the noise floor.

A further very important advantage is that due to the tight coupling of the first and the second receiver a very precise time based analysis can be carried out. This can be used in case one or more false GNSS sources need to be located which operate in a random burst mode.

Embodiments and advantages will become more apparent from the following detailed description of preferred embodiments.
- Figure 1: shows a basic antenna concept of the GNSS receiver according to the invention.
- Figure 2: shows a variable mitigation antenna of an alternative antenna concept of the invention.
- Figure 3: shows a simplified 1-channel GNSS radio frequency (RF) front-end.
- Figure 4: shows a reference clock generation circuit of a single frequency re-ceiver.
- Figure 5: shows a reference clock generation for a 2-channel RF section.
- Figure 6: shows a 2-channel RF front-end architecture according to a GNSS receiver according to the invention.
- Figure 7: shows a schematic diagram of multi-source tracking of burst transmitters.
- Figure 8: shows a setup of a DE-BOC receiver.
- Figure 9: shows a DE-BOC receiver according to the invention which can be configured to act as a conventional BPSK receiver.

A GNSS receiver according to the invention is based on the concept of a closely coupled system of two or more receivers which are connected to respective antennas having an omnidirectional characteristic and a directional characteristic wherein the latter can be swivelled at least over the entire area covered by the omnidirectional antenna. In such a way the system is able to pick up very weak signals and signals which are only available during short moments as numerical filters can be narrowed down strongly due to the high time precision (and with this frequency precision) provided by the other receiver.

The GNSS receiver according to the invention can be realized with different antenna combinations, a receiver system comprising a first receiver being connected to the omnidirectional antenna and at least one secondary receiver being connected to the at least one directional antenna, wherein the first and the secondary receiver are coupled to each other. Furtermore to the invention belongs a control unit being capable to handle a variety of different operation scenarios differing from regular GNSS receiver operations and an optional aiding support which provides actual valid satellite data like Almanac and Ephemeris data for all possibly visible GNSS satellites in a specific area and/or precise time information.

The different elements of the receiver system of a GNSS receiver according to the invention and elements needed to support the receiver system are described in more detail below.

### Antennae section

There are different alternatives to realize an antenna for a GNSS receiver according to the invention. Below, three general representations will be disclosed, which might be modified in various ways depending on the final system requirement.

GPS, Glonass, Egnos as well as GALILEO Satellites transmit its signals in a righthand circular polarized way. Although it is possible for an interference location receiver to also deal at least with linear polarized signals in order not to limit the use scenario.

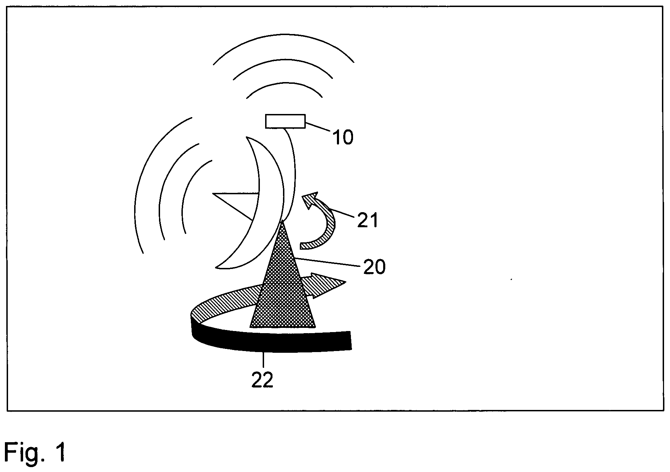

The most simplified realization shown in Figure 1 is based on the combination of one omni directional antenna 10 in combination with one or more individually steerable focussed antennae 20. Movement directions of antenna 20 are indicated with 21 and 22.

In a special variant, e.g. for a hand held locator comprising a GNSS receiver according to the invention, the antenna system might be a realization of an omni directional antenna 10 in combination with a narrow beam antenna 20 and a magnetic compass/accelerometer unit to identify the attitude of the receiver system at every moment. Such a system requires to manually scan the area for the target signal source.

In case of the depicted system of Figure 1 such a system could be vehicle mounted or stationary and carry out the search in a fully autonomous way. The narrow beam antenna is steered by a controlling unit, which is responsible for the overall system handling.

The advantages of such a basic system are:
- cost efficiency,
- relative simple realization (e.g. under a radome on top of a car),
- the omni directional antenna allows for acquisition of a full 3D-fix which might be advantageous in some situations,
- both antennae 10, 20 can be realized in a very noise free way (Antenna is not generating noise other than thermal noise).

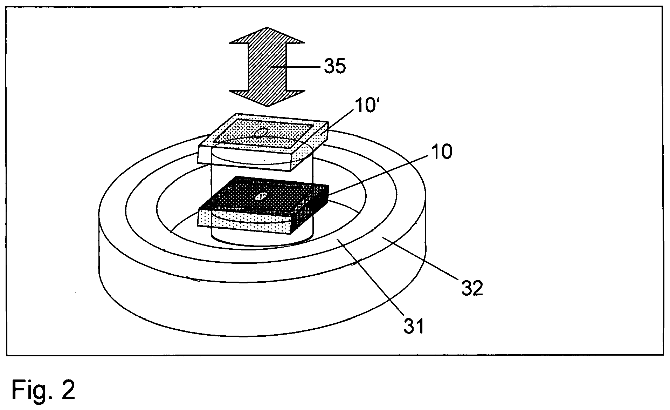

The disadvantage that the omni directional antenna 10 of Figure 1 could be affected by interference or jamming signal can be partly mitigated by placing the omni directional antenna 10 in the centre of a choke ring structure 31, 32 consisting of an inner choke ring 31 and an outer choke ring 32. If in that case the position of the antenna element 10 can be changed (low position of antenna is depicted with 10, a high position is depicted with 10') with respect to the choke ring structure 31, 32 a kind of aperture will be realized which helps to blind out signal sources with low vertical elevation as shown in Figure 2.

As such a type of Antenna can be realized without significant effort and as it does not require much more integration space than a static antenna such a type of advanced omni directional antenna is preferred.

In an alternative embodiment the omnidirectional antenna is replaced by another narrow beam or focussed antenna. A practical realization makes use of three antennae: One omni directional type as described in conjunction with Figure 1, one narrow beam antenna to search the desired signal source and a second narrow beam antenna. In case of severe jamming where regular satellite signals can not be received any more by the omni directional antenna, the system can switch to the second narrow beam antenna. By means of almanac information and by support of inertial attitude sensors (e.g. Magnet compass, 3-Axis accelerometer) this antenna can be pointed to one particular satellite. Due to the high directivity and the free choice in available satellites it will be almost impossible to suppress such receptions. This signal then acts as a reference while the other channel is used to locate individual signal sources in the environment. Especially in combination with a communication channel, which allows access to an aiding server or to RTK data this concept will help to quickly localize even weak signal sources in a very noisy environment. In case of air borne interference signal sources this antenna concept is advantageous as the omni directional antenna might not be able to receive proper satellite signals in case the jamming/spoofing source is at high altitude above the search device.

A further advantage of the alternative antenna system is that it is a very robust antenna front end which will work under almost all conditions.

A further alternative is the use of a planar multi direction phased array antenna. If utilized, this antenna system it is a cost efficient alternative to the concept proposed in conjunction with Figure 1 although the prototyping effort for such an antenna might even be higher. To be able to achieve a suited beam focussing capability also for this antenna the required area is big. So it is suited for stationary or vehicle mount operation and it is typically not suited for handheld units. The advantage is that here the antenna is consisting of multiple tiny antenna elements, typically arranged in one plane. As it is not even required that the plane needs to be planar such an array antenna can be adapted to different type of shapes (e.g. an aircraft fuselage). It can also be integrated into the roof of an ordinary car so that such an antenna can not be directly identified form distance. A technical description on the basic principles on how a phased array operates is illustrated under: http://www.radartutorial.eu/06.antennas/an14.en.html.

In a typical operation scenario for GNSS tasks the main antenna plane is usually horizontally mounted. This results in having proper control to point to different satellites but it normally does not allow pointing the antenna beam to an object at or even below the antenna plane as what is typical for ground based signal sources. In such a way in these scenarios the planar antenna can replace the antenna used for picking up satellite signals, i.e. the omnidirectional antenna mentioned above, but a separate narrow beam antenna to point to the target signal source will additionally be needed. With the electronic steering capability the planar antenna can be changed from an omnidirectional characteristic to a narrow beam characteristic without the need of mechanical elements. Depending on the complexity of such an antenna design even multiple, individually steerable narrow beams can be realized each tracking a different satellite.
Advantages of this system:
- Mechanically robust due to no moving parts
- Can be integrated in different base structures, e.g. car-roof, House roof, Aircraft fuselage...
- In case of a complex multi channel antenna several satellites can be tracked with individual narrow beam lobes from one antenna. This can allow e.g. to acquire a 3D-fix even in a highly jammed environment.
- Cost efficient realization if produced in quantity

### RF - section

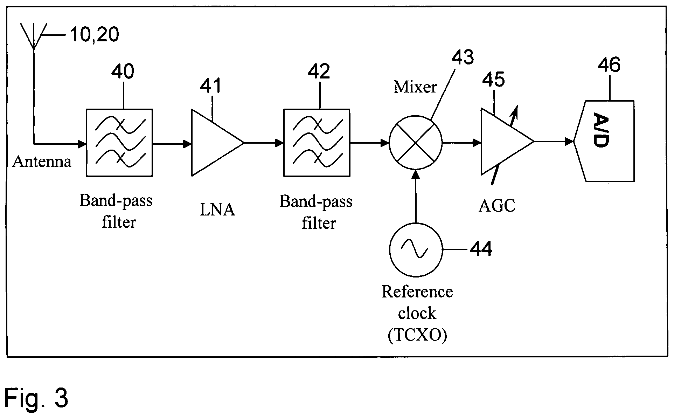

As the GNSS receiver is intended to operate in a noisy environment which might be affected by strong radar and jamming signals, a large signal stable, adjustable input band-pass filter 40 connected to each antenna of the antenna system is useful as shown in Fig. 3 which is illustrating a typical GPS/Galileo RF front-end. Furthermore special care needs to be taken in the selection of the input LNA (Low Noise Amplifier) 41. This amplifier has to be capable in handling strong and weak signals simultaneously. A separate protection circuit at the antenna connection for EMI pulses or very strong signals is used to prevent destruction of the LNA 41 or the subsequent mixer structure 43.

### RF front-end (receiver) architecture

A typical GPS/GALILEO RF front-end comprising above mentioned elements is shown in a simplified way in Figure 3. This sketch as well is suited to depict at least a single channel GLONASS front-end. So it is with limitations suited to describe a general GNSS receiver architecture.

A major element of this architecture and a key point in the signal location system as well is the reference clock generation unit (TCXO) 44. What looks like a simple element in Figure 3 is in reality a complex function block with direct impact on the general receiver performance. Especially in case of coupling two receiver front-ends tightly together this plays a major role. Its structure is explained later more detailed.

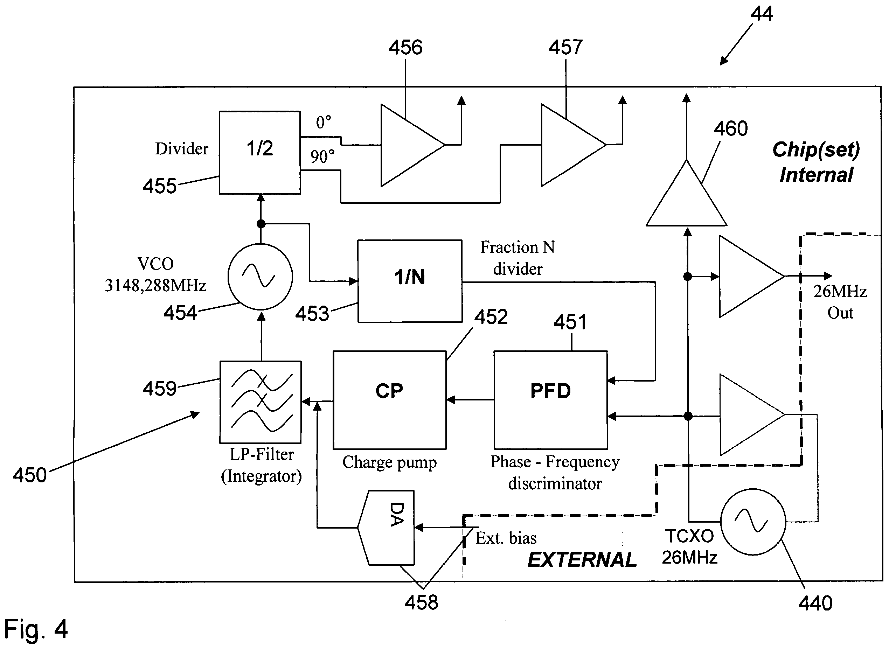

In case of seeking a weak spoofing signal source and in case of operating the receiver in a "non Zero IF" mode the same IF frequency output as been generated in a IF clock generation unit according to Figure 4 can be used for both receivers. Phase differences and Doppler frequency offsets between the real satellite signal and the spoofing signal can be respected in this case in the base band section. In this case a frequency and phase coupling between both RF front-ends is realized, which will be described later. This works fine in case the satellite and spoofing signals use the same carrier frequency - which practically will mostly be the case.

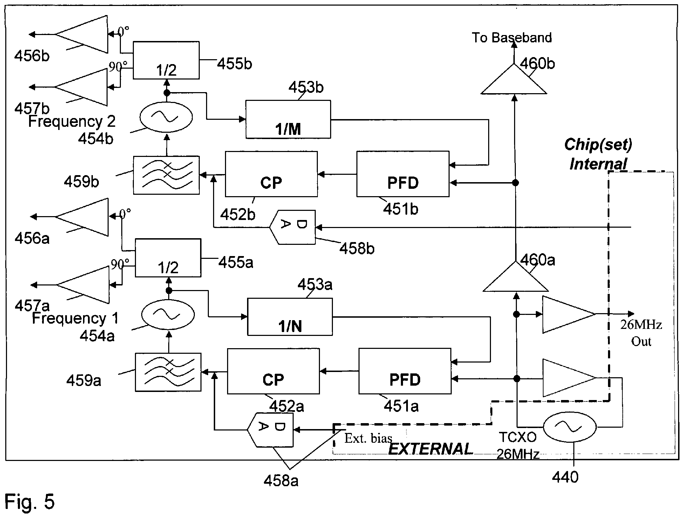

In case the satellite reference signal utilizes a different frequency band than where the spoofing signal is located on, an architecture as shown in Figure 5 has to be used. In that case internal division coefficients N and M must be selected according the relevant needs. In this case N will be adjusted by locking to a dedicated satellite or if possible by acquisition of a full 3D-fix state. Once this is accomplished M can be simply calculated as the reference frequency for N is well known. Even in the case that only one single satellite acts as reference source this procedure can be carried out as the Doppler shift to be expected is in the range of a few kHz, as also the possible Doppler shift of the spoofing transmitter is. These both variations are well covered by the IF bandwidth of the receiver so the baseband part can analyze these data in detail.

In case of operating the receiver in a "Zero IF" mode the situation becomes more challenging for the RF section as any frequency deviations can cause trouble. Nevertheless, it is also relied on a clock system as shown in Figure 5. Hence, the internal division coefficients N and M are determined. Determination of N works as described for the "non Zero IF" case. The difference is that M can not be finally calculated. The calculated M designates the centre area of a frequency search bin. By small variations of this calculated M value a search needs to be started to locate the corresponding target signal within a few kHz range around the frequency defined by the calculated M. Reserving a search space of about ± 2MHz is fine for all static or slow moving interference, jamming or spoofing sources. This will cover nearly all threatening scenarios which can be envisaged. In case the system shall also be enabled to deal with fast moving signal sources it will not be a big issue in increasing the search range accordingly.

In the GNSS receiver according to the invention a frequency coupling between both receivers will be realized. Whether a phase coupling can be realized is directly related to the stack-up of the used receiver and the control software which is steering it. However a close phase coupling can in general be achieved with this concept.

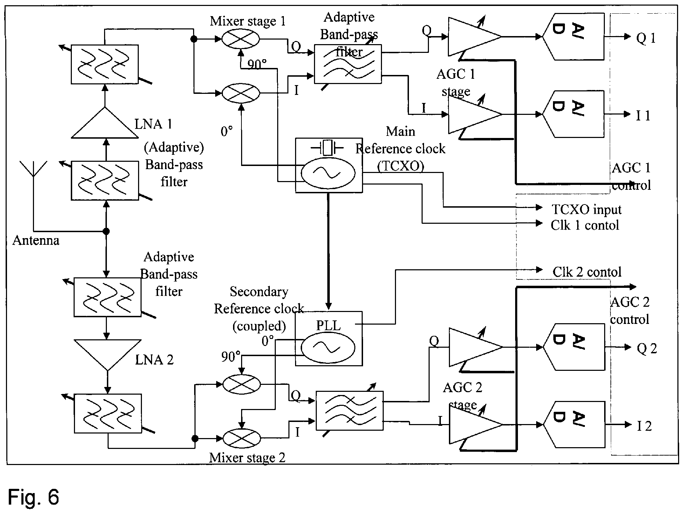

Figure 6 shows the architecture of such a dual RF front end component, being suited for the signal locating system.

### Reference Clock generation

One central element defining the quality of the final receiver directly is the clock generation within the front-end. In contrary to the simplified RF- front end sketch in Figure 3 this element comprises a much more complex architecture. Such a more detailed line-up of the reference generation circuit for a typical 1,57542GHz signal receiver is shown in Figure 4.

The reference clock generation circuit is shown for a single frequency receiver. An external TCXO 440 is acting as a reference clock for the receiver. As this might at later times be replaced by a XO the necessary ring-amplifier is also implemented (shown in grey). This reference clock is used by a PLL (Phase-Lock-Loop) circuit 450 comprising of a Phase-Frequency discriminator 451, a Charge pump 452, a LP-Filter (Integrator) 459 and cascaded Fraction N dividers 453 (to keep the sketch simple here only one divider is shown). The PLL 450 controls the oscillation of an embedded VCO (Voltage controlled Oscillator) 454 which generates an output signal being at least a factor 2 higher than the carrier frequency of the desired signal (factor 4 would also be possible). This signal is subsequently divided down (by a divider 455) close to the carrier frequency. Doing this, two signals orthogonal in phase are obtained which are buffered (by buffers 456, 457) and fed into the Mixer part of the RF circuit. For improved start-up behaviour the correction signal of the PLL 450 can be externally biased (458). This feature will be essential if operating the circuit with an external XO only instead of using a TCXO 440. It is important that also the division ratio of the cascaded fraction N divider can be set externally in order to accommodate for different carrier frequencies. This detail is not shown in Figure 4 to keep the image simple. Finally the buffered TCXO 440 (or XO) reference clock signal is fed out to be used externally.

Another Buffer 460 is feeding this reference signal inside the chip to the base band circuit as this part also requires a very accurate reference clock for it's DLLs (Delay Locked Loop).

For the proper operation of the receiver it is important that the whole clock generation operates noise- and jitter-free. To achieve this, special care has to be taken with the fraction N divider as odd division ratios easily can lead to jitter problems. A good decoupling of this stage has to be achieved versus the base band section and power fluctuations have to be avoided.

In order to support simultaneously the reception of two different frequencies the centre part of the clock generation circuit needs to be duplicated. In this case two PLLs are required being fed with the same reference clock. By using independent divider ratios both VCOs can be set to different frequencies. The circuit of that increased stage is illustrated in Figure 5. The elements of both clock generation circuits are depicted with the same reference numerals, followed by an "a" for the elements of the first and followed by a "b" for the elements of the second clock generation circuit.

### Baseband - section

The base band section is of further interest for realizing a sensitive interference, jamming and spoofing source locating system. As in the case of the RF section a tight coupling of two individual base band units improves the system performance quite a lot compared to systems of two uncoupled base band sections which are subject of the patents US 5,818,389 and US 7,193,560 B2.

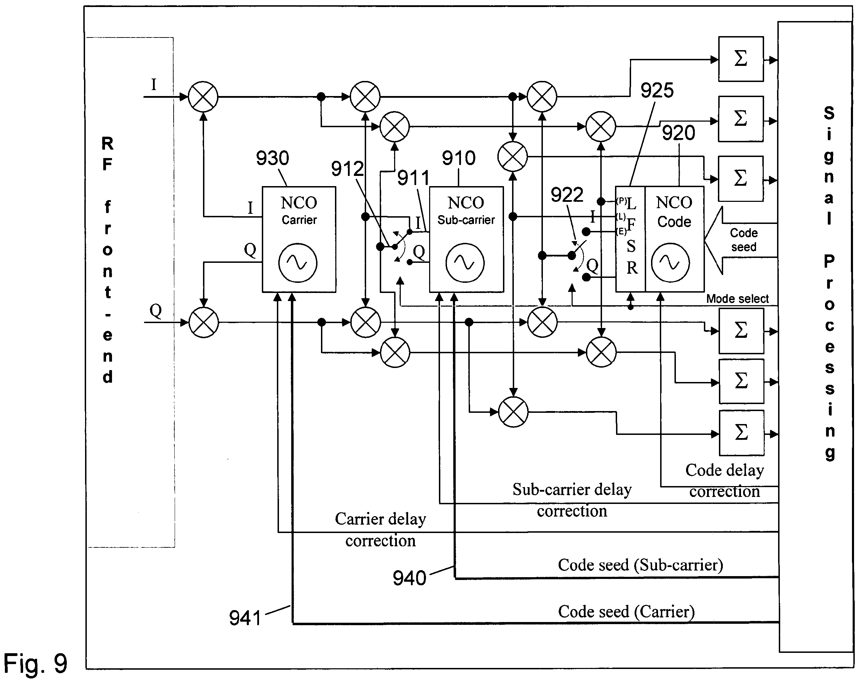

A base band section as shown in Figure 9 might be used as such a system offers most flexibility and allows the use of the system on BPSK modulation as used by most of today's GPS, Glonass and Egnos signals, on MBOC modulation as planned for Galileo and some GPS signals and as it allows for seeding the different numerical oscillators with individual start conditions (code seeding). This allows keeping track to a reference signal with the first receiver (e.g. 3D-fix state) while the second receiver can be steered in all details for picking up the target signal. In such a way an intermittent search can be best supported as well as the simultaneous search of multiple target signals (e.g. caused by multiple signal sources deployed at different locations) utilizing the same frequency can be enabled.

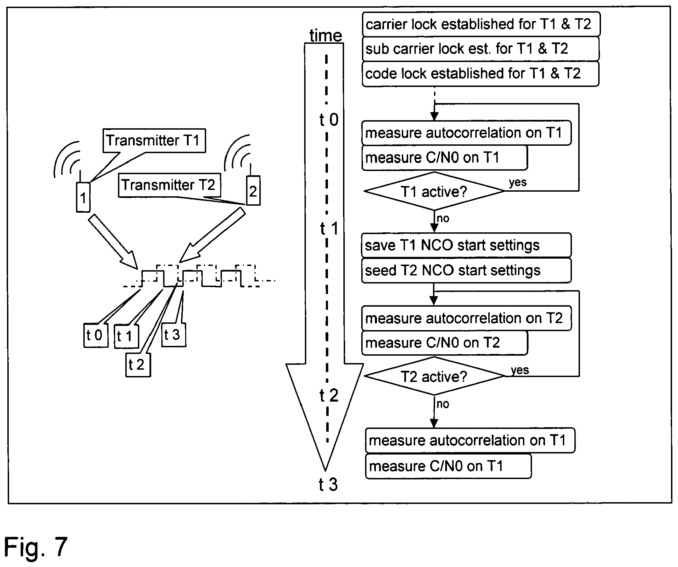

One example how such a multi source search/tracking can be done is shown in Figure 7. In this example only the tracking process is illustrated as the three necessary carrier locks have been established at an earlier time. However, even the locking process could be realized as a chopped process in a similar way. The basic principle is always the same: As soon as the actual target signal disappears, the latest NCO (Numerically controlled oscillator) settings will be saved, settings for another still available signal are transferred to the NCOs (as long as a further signal source is active), the search is now carried out for this new source. As soon as the first source appears again the NCO settings belonging to the second source are saved, the old first signal source settings are reloaded as start parameters into the NCOs and the search continues exactly at that position where it stopped at the end of the previous burst.

Once a lock of all NCOs is established, the NCO data stored allows an immediate lock once the data are re-loaded into the NCO. By this even tiny bursts can be tracked and located as long the pausing between the bursts is not too long in combination with a moving signal source.

### The main correlator section within the baseband-section

As stated in the entry section above for best signal detection a dual estimator approach has to be realized by the use of three cascaded DLL loops. The main correlator section is required to be built up in a duplicated way in order to fully support both RF channels simultaneously.

The proposed GNSS receiver supports the decoding of MBOC signals as well as of BPSK signals and allows carrier-phase correlation.

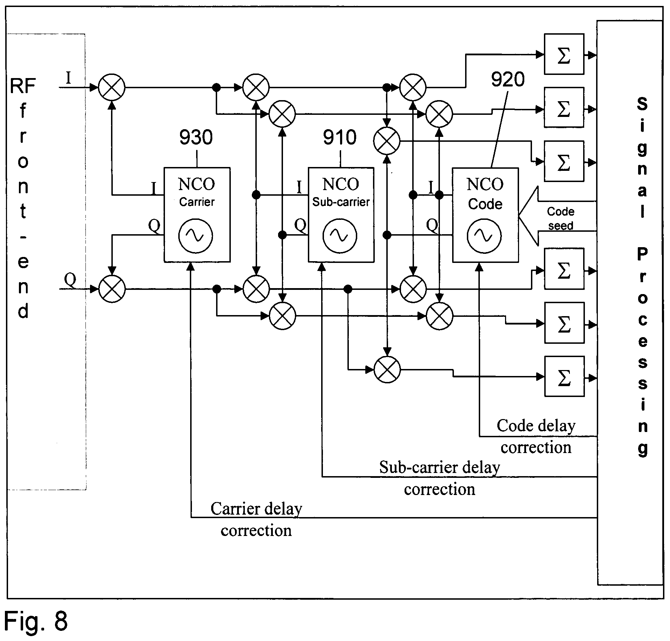

Although the DE-BOC receiver shown in Figure 8 is capable of also handling BPSK signals which e.g. are transmitted by GPS satellites, there might be a request in using a conventional E-P-L style BPSK receiver. This can be done by some minor modifications to the DE-BOC general stack-up of Figure 8.

The DE-BOC receiver shown in Figure 9 can be configured to act as conventional BPSK receiver. In such a case the Sub-carrier NCO 910 has to be set to permanently output 1 on it's I port 911 and additionally the shown switch 912 has to be set in the direction shown in Figure 9. Allowing the NCO 910 to be switched hard to a steady output is something which needs to be respected in the initial design phase of the element. Furthermore a similar signal switch needs to be implemented at the output of the code NCO 920 as shown. Both switches 912, 922 are controlled simultaneously by the base-band controller. Finally the code NCO 920 needs to be increased by a Linear Feedback Shift Register (LFSR) 925 which is an essential element of a conventional BPSK receiver concept. The LFSR 925 outputs to the P, L and E port. Here P refers to the Prompt channel, L to the Late channel and E to the Early channel of a conventional PSK receiver structure. In case of using the BOC mode all three ports are acting in parallel as the I-signal port. This LFSR 925 has to be implemented in a way that it can be bypassed. Bypassing the LFSR is necessary if any BOC signal reception is intended. In that case aside the bypassing also all three I-Ports (P, L, E) are switched parallel so that these give out the identical signals. In case the BOC reception mode is desired switch 922 in Figure 9 needs to be set to the Q-Port of the NCO 920.

The displayed code seeding (reference numerals 940, 941) for the carrier- and Sub-carrier-NCO 910, 930 is not ultimately needed (as long as the Sub-carrier NCO 910 can be set to a fixed output state as described before) for a general GNSS signal receiver but for the locating receiver it will give quite significant advantages in terms of flexibility of the entire system. As the effort and die size to implement this function is neglectable it is preferred foreseeing this seeding option. Although not shown in Figure 8 it is in the same way advantageous to implement the seeding function there, too.

In order to be able to use both RF channels in parallel this base band section needs to be realized twice in an appropriate base-band chip.

The here shown dual estimator based BOC receiver relies on the stiff and constant phase coupling between the Code and the Sub-carrier signals.

### Software, Processing & Memory

To support the full capabilities of the system a control processor is provided to handle a variety of different operation scenarios differing from regular GNSS receiver operation. One of these special tasks is reading out NCO states and storing them in a rapid-access memory area. Also the seeding of stored codes into the NCOs is a task to be done by the control processor.

In a further embodiment, the receiver system receives final NCO data via a control unit from an external means enabling a direct reception of desired signals without long acquisition times. An extermnal means can be, for example, a memory, computation results, secondary coupled receivers, etc.

Furtheron, the control processor is able to read out the autocorrelation results of the individual DLLs (Delay Locked Loops) in the base band section. This is necessary to properly adapt in the best way to the different use scenarios. For example, a typical interference source will harm the carrier frequency, but if analyzing the autocorrelation of sub-carrier or even of the code will not provide useful results. In case of a jamming source the carrier and the sub-carrier autocorrelation function is of interest. In case of a spoofing source (depending of the kind of spoofing) all three autocorrelation functions might be of interest.

### Receiver software

The receiver software is able to output this kind of information to a central processing unit which is carrying out the main data analysis, the steering of the antenna(e) and which has to handle incoming data from an INU (Inertial Navigation Unit - here mainly 3Axis accelerometer and electronic compass). It as well has to accept configuration commands being generated by the central processing unit. An additional feature is a separate thread carrying out FFT analysis of AD (Analogue-Digital) data from at least one receiver. This feature on one hand allows for a rapid impression on e.g. how many jammers are active on the same channel but it as well can significantly speed up the locking process of the DLLs in the base band section. It as well is able to allow for an immediate Doppler shift analysis of all signal sources on the same RF channel.

### Central processing software

As mentioned in the section above already the number of tasks for the central processing unit is limited and less challenging than e.g. the software is for the receiver section. Nevertheless this part acts as the master inside the system to steer and control all other functions. In Detail the tasks of the Central processing software are:
- Offering a MMI (Man-Machine Interface).
- Keeping continuously track of the system attitude by rapid cycle interrogation of an INU at least comprising of a 3-axis accelerometer and a magnetic compass (instead of the compass also a pre-aligned 3-axis gyro system might be used but that is usually much more expensive).
- Collecting measurement data on a rapid cycle interaction from both receiver sections.
- Steering the target search antenna in a way to appropriately scan the area of interest.
- If implemented, control the switch from an omni directional reference antenna to a narrow beam reference antenna.
- In case two directive antennas are used to track the reference satellite with the satellite pointing antenna.
- Compute from Almanac data the correct position for the antenna to point towards the reference satellite.
- Build up communication channels to communicate with servers or other search units.

### Aiding support

A further feature to implement into such a system solution is aiding. Aiding is the way of providing actual valid satellite data like Almanac and Ephemeris data for all possibly visible GNSS satellites in that specific area and/or precise time (ideally UTC time information).

These data allow for initial increased sensitivity of more than 10dB compared to a regular cold start situation. As these data allow for directly focusing on specific satellites instead of searching for them, the Base band unit can directly operate with its digital filters set for a narrow bandwidth. This is the reason which boosts the receiver sensitivity for more than 10dB. Aside this advantage narrowing down the Band filters also significantly helps to find or track signals in noisy environments such as severe interference or jamming scenarios.

In case of an extremely interfered, jammed or spoofed environment aiding data will allow to precisely point a narrow beam antenna on a GNSS satellite acting as reference signal source and to track it while another narrow beam antenna can start to seek for the noise sources in the environment.

The communication required for server aiding can use different channels such as GSM, UMTS, etc. However, it should be considered that in case of a jamming or spoofing attack simultaneously also these public communication means might as well be affected and not available. So ideally at least an independent medium range (0-~10km) communication system should be considered which is very robust and can maintain communication links even in very noisy environment. Ideally, it must not use frequencies allocated for public communication channels like GSM, UMTS or LTE.

In this scenario, the systems carry out inter-system communication as well as server connections. This is needed on one side if the link to an aiding server can not be established due to an unknown reason and on the other side it allows units to exchange bearing and timing data so that the results of a cross-bearing can be seen on each single unit concerning a specific signal source. By this a master control station is not required and the execution team out in the field is greatly supported in finding and eliminating the harmful signal sources.

## Claims

1. A GNSS receiver, comprising
- a first antenna (10) having an omnidirectional characteristic,
- at least one second antenna (20) having a directional characteristic,
wherein the at least one second antenna (20) can be swivelled at least over the entire area covered by the first antenna (10),
- a receiver system comprising a first receiver being connected to the first antenna and a second receiver being connected to the at least one second antenna, the first and the second receiver can be coupled frequency and phase wise to each other,
- the receiver system being configured to
-- pointing the at least one second antenna (20) to one specific satellite and comparing an output signal of the second receiver with an output signal of the first receiver to lock to a valid satellite signal and enabling the second receiver for immediate reception due to the frequency and phase wise coupling to the locked first receiver; and
-- scanning over an area with the at least one second antenna (20) while the first antenna (10) keeps track of a valid satellite signal to identify jamming and spoofing sources.

2. The GNSS receiver according to claim 1, wherein the first antenna (10) is a omni directional antenna and the at least one second antenna (20) is a individually steerable focussed antenna.

3. The GNSS receiver according to claim 1 or 2, wherein the at least one second antenna (20) is a narrow beam antenna combined with a magnetic compass/accelerometer unit to identify the attitude of the at least one second antenna (20) at every moment.

4. The GNSS receiver according to anyone of claims 1 to 3, wherein the first antenna (10) is placed in the centre of a choke ring (31, 32) assembly, wherein the position of the first antenna (10) along a symmetry deviation is optionally adjustable.

5. The GNSS receiver according to anyone of claims 1 to 4, wherein the first antenna is pointed to one particular satellite by means of almanac information and by support of an inertial attitude sensor.

6. The GNSS receiver according to claim 1 wherein the first antenna (10) consists of multiple tiny antenna elements which are arranged on a given surface, especially on plane surfaces.

7. The GNSS receiver according to anyone of claims 1 to 6, wherein a protection circuit is arranged between the first and the second antennas (10, 20) and the receiver system.

8. The GNSS receiver according to anyone of claims 1 to 7, wherein a same IF frequency output as been generated in a IF clock generation unit of one of the receiver systems is used for the first and the second receiver in case of a weak spoofing signal source and in case of operating the receiver system in a "non-zero IF" mode.

9. The GNSS receiver according to anyone of claims 1 to 8, wherein a reference clock generation circuit (44) of the receiver system comprises two phase locked loop (PLL) circuits comprising a phase-frequency discriminator, a charge pump and cascaded fraction N dividers, to control the oscillation of an embedded voltage controlled oscillator (VCO) which generates an output signal being at least a factor 2 higher than the carrier frequency of the desired signal, the two PLL circuits being fed with a same reference clock signal.

10. The GNSS receiver according to anyone of claims 1 to 9, wherein the first and the second receiver each comprise three cascaded delay locked loops (DLLs).

11. The GNSS receiver according to anyone of claims 1 to 10, wherein a first and a second baseband unit of the first and the second receiver are configured to save the latest Numerical control oscillator (NCO) settings and transfer the settings for another still available signals to the NCO, as soon as the actual target signal disappears.

12. The GNSS receiver according to anyone of claims 1 to 11, wherein once a lock of all NCOs of the first or the second receiver is established, NCO data are stored which allow an immediate lock to a GNSS signal once the data are re-loaded into the NCO.

13. The GNSS receiver according to anyone of claims 1 to 12, wherein the receiver system comprises a control unit being configured to read out NCO states and store the states in a memory.

14. The GNSS receiver according to claim 13, wherein a control unit is configured to read out autocorrelation results of individual DLLs of the baseband unit.

15. The GNSS receiver according to anyone of claims 1 to 14, wherein the receiver system is receiving final NCO data via a control unit from an external means enabling a direct reception of desired signals without long acquisition times.

## Patentansprüche

1. GNSS-Empfänger, umfassend
- eine erste Antenne (10) mit einer onmidirektionalen Eigenschaft,
- zumindest eine zweite Antenne (20) mit einer gerichteten Eigenschaft, wobei die zumindest eine zweite Antenne (20) zumindest über den gesamten Bereich schwenkbar ist, der durch die erste Antenne (10) abgedeckt wird,
- ein Empfängersystem, das einen ersten Empfänger, der mit der ersten Antenne verbunden ist, und einen zweiten Empfänger umfasst, der mit der zumindest einen zweiten Antenne verbunden ist, wobei der erste und der zweite Empfänger frequenz- und phasenweise miteinander verbunden werden können,
- wobei das Empfängersystem konfiguriert ist, um
- die zumindest eine zweite Antenne (20) auf einen einzelnen spezifischen Satelliten weisen zu lassen und ein Ausgabesignal des zweiten Empfängers mit einem Ausgabesignal des ersten Empfängers zu vergleichen, um sich auf ein gültiges Satellitensignal aufzuschalten, und um den zweiten Empfänger zu einem unmittelbaren Empfang auf Grund der frequenz- und phasenweise Verbindung mit dem aufgeschalteten ersten Empfänger zu befähigen; und
- über einen Bereich mit der zumindest einen zweiten Antenne (20) abzutasten, während die erste Antenne (10) ein gültiges Satellitensignal nachverfolgt, um Stör- und Spoofing-Quellen zu identifizieren.

2. GNSS-Empfänger gemäß Anspruch 1, wobei die erste Antenne (10) eine omnidirektionale Antenne ist und die zumindest eine zweite Antenne (20) eine individuell lenkbare, fokussierte Antenne ist.

3. GNSS-Empfängern gemäß Anspruch 1 oder 2, wobei die zumindest eine zweite Antenne (20) eine Antenne mit schmalem Strahl ist, die mit einer magnetischen Kompass-/Beschleunigungsmessseinheit kombiniert ist, um die Lage der zumindest einen zweiten Antenne (20) zu jedem Zeitpunkt zu identifizieren.

4. GNSS-Empfänger gemäß zumindest einem der Ansprüche 1 bis 3, wobei die erste Antenne (10) im Mittelpunkt einer Choke-Ring- (31, 32) -Anordnung platziert ist, wobei die Position der ersten Antenne (10) entlang einer Symmetrieabweichung optional einstellbar ist.

5. GNSS-Empfänger gemäß zumindest einem der Ansprüche 1 bis 4, wobei die erste Antenne auf einen einzelnen bestimmten Satelliten mittels Almanachinformationen und durch die Unterstützung eines Trägheitslagensensors gerichtet wird.

6. GNSS-Empfänger gemäß Anspruch 1, wobei die erste Antenne (10) aus mehreren winzigen Antennenelementen besteht, die auf einer gegebenen Oberfläche, insbesondere auf ebenen Oberflächen, angeordnet sind.

7. GNSS-Empfänger gemäß zumindest einem der Ansprüche 1 bis 6, wobei eine Schutzschaltung zwischen der ersten und der zweiten Antenne (10, 20) und dem Empfängersystem angeordnet ist.

8. GNSS-Empfänger gemäß zumindest einem der Ansprüche 1 bis 7, wobei eine gleiche IF-Frequenzausgabe, wie in einer IF-Takterzeugungseinheit aus einem der Empfängersysteme erzeugt wurde, für den ersten und den zweiten Empfänger im Fall einer schwachen Spoofing-Signalquelle und im Falle des Betriebs des Empfängersystems in einem "Nicht-Null-IF" -Modus verwendet wird.

9. GNSS-Empfänger gemäß zumindest einem der Ansprüche 1 bis 8, wobei eine Referenztakterzeugungsschaltung (44) des Empfängersystems zwei Phasenregelschleifen- (PLL) -Schaltungen umfasst, die wiederum einen Phase-Frequenzunterscheider, eine Ladungspumpe und kaskadierende Bruchteil-N-Teiler umfassen, um die Schwingung eines eingebetteten, spannungsgesteuerten Oszillators (VCO) zu steuern, der ein Ausgabesignal erzeugt, das zumindest um einen Faktor 2 höher als die Trägerfrequenz des gewünschten Signals ist, wobei die zwei PLL-Schaltungen mit dem gleichen Referenztaktsignal versorgt werden.

10. GNSS-Empfänger gemäß zumindest einem der Ansprüche 1 bis 9, wobei der erste und der zweite Empfänger jeweils 3 kaskadierende Verzögerungsregelschleifen (DLLs) umfassen.

11. GNSS-Empfänger gemäß zumindest einem der Ansprüche 1 bis 10, wobei eine erste und eine zweite Basisbandeinheit des ersten und des zweiten Empfängers konfiguriert sind, um die jüngsten Einstellungen eines numerischen Steueroszillators (NCO) zu speichern, und die Einstellungen für weitere verfügbare Signale an den NCO zu transferieren, sobald das gegenwärtige Zielsignal verschwindet.

12. GNSS-Empfänger gemäß zumindest einem der Ansprüche 1 bis 11, wobei, wenn erst einmal eine Aufschaltung aller NCOs des ersten und des zweiten Empfängers eingerichtet ist, NCO-Daten gespeichert werden, die eine unmittelbare Aufschaltung auf ein GNSS-Signal ermöglichen, wenn die Daten erst einmal in den NCO neu geladen werden.

13. GNSS-Empfänger gemäß zumindest einem der Ansprüche 1 bis 12, wobei das Empfängersystem eine Steuereinheit umfasst, die konfiguriert ist, um NCO-Zustände auszulesen und die Zustände in einem Speicher zu speichern.

14. GNSS-Empfänger gemäß Anspruch 13, wobei eine Steuereinheit konfiguriert ist, um Autokorrelationsergebnisse individueller DLLs der Basisbandeinheit auszulesen.

15. GNSS-Empfänger gemäß zumindest einem der Ansprüche 1 bis 14, wobei das Empfängersystem endgültige NCO-Daten über eine Steuereinheit von einer externen Einrichtung empfängt, die einen direkten Empfang von gewünschten Signalen ohne lange Erlangungszeiten ermöglicht.

## Revendications

1. Récepteur GNSS, comprenant :
- une première antenne (10) dotée d'une caractéristique omnidirectionnelle,
- au moins une seconde antenne (20) dotée d'une caractéristique directionnelle, dans lequel l'au moins une seconde antenne (20) peut être pivotée au moins sur toute la zone couverte par la première antenne (10),
- un système de récepteur comprenant un premier récepteur qui est relié à la première antenne et un second récepteur qui est relié à l'au moins une seconde antenne, le premier et le second récepteur peuvent être reliés par fréquence et par phase l'un à l'autre,
- le système de récepteur étant conçu pour :
-- pointer l'au moins une seconde antenne (20) vers un satellite spécifique et comparer un signal de sortie du second récepteur à un signal de sortie du premier récepteur pour verrouiller sur un signal de satellite valide et permettre une réception immédiate au second récepteur grâce au couplage par fréquence et par phase au premier récepteur verrouillé ; et
-- scanner sur une zone avec l'au moins une seconde antenne (20) tandis que la première antenne (10) conserve la trace d'un signal de satellite valide pour identifier les sources de brouillage et d'usurpation.

2. Récepteur GNSS selon la revendication 1, dans lequel la première antenne (10) est une antenne omnidirectionnelle et l'au moins une seconde antenne (20) est une antenne focalisée orientable individuellement.

3. Récepteur GNSS selon la revendication 1 ou 2, dans lequel l'au moins une seconde antenne (20) est une antenne à faisceau étroit combinée avec une unité d'accéléromètre/de compas magnétique pour identifier l'attitude de l'au moins une seconde antenne (20) à chaque moment.

4. Récepteur GNSS selon l'une quelconque des revendications 1 à 3, dans lequel la première antenne (10) est placée au centre d'un ensemble d'anneaux d'arrêt (31, 32), dans lequel la position de la première antenne (10) le long d'un écart de symétrie est éventuellement réglable.

5. Récepteur GNSS selon l'une quelconque des revendications 1 à 4, dans lequel la première antenne est pointée sur un satellite particulier au moyen d'informations d'almanach et par le support d'un capteur d'attitude inertielle.

6. Récepteur GNSS selon la revendication 1, dans lequel la première antenne (10) se compose de multiples éléments d'antenne minuscules qui sont disposés sur une surface donnée, spécialement sur des surfaces planes.

7. Récepteur GNSS selon l'une quelconque des revendications 1 à 6, dans lequel un circuit de protection est disposé entre les première et seconde antennes (10, 20) et le système de récepteur.

8. Récepteur GNSS selon l'une quelconque des revendications 1 à 7, dans lequel une même sortie de fréquence IF comme celle qui a été générée dans une unité de génération d'horloge IF d'un des systèmes de récepteur est utilisée pour le premier et le second récepteur en cas de source de signal d'usurpation faible et en cas de fonctionnement du système de récepteur dans un mode « IF non nul ».

9. Récepteur GNSS selon l'une quelconque des revendications 1 à 8, dans lequel un circuit de génération d'horloge de référence (44) du système de récepteur comprend deux circuits de boucle à verrouillage de phase (PLL) comprenant un discriminateur de phase-fréquence, une pompe de charge et des diviseurs N de fraction en cascade, pour commander l'oscillation d'un oscillateur commandé en tension intégré (VCO) qui génère un signal de sortie qui est au moins un facteur 2 supérieur à la fréquence de porteuses du signal souhaité, les deux circuits PLL étant alimentés avec un même signal d'horloge de référence.

10. Récepteur GNSS selon l'une quelconque des revendications 1 à 9, dans lequel le premier et le second récepteur comprennent chacun trois boucles de verrouillage de retard en cascade (DLL).

11. Récepteur GNSS selon l'une quelconque des revendications 1 à 10, dans lequel une première et une seconde unité de bande de base du premier et du second récepteur sont conçues pour sauvegarder les tous derniers réglages de l'oscillateur de commande numérique (NCO) et transférer les réglages pour d'autres signaux encore disponibles au NCO, dès que le signal cible actuel disparaît.

12. Récepteur GNSS selon l'une quelconque des revendications 1 à 11, dans lequel une fois qu'un verrouillage de l'ensemble des NCO du premier ou du second récepteur est établi, des données de NCO sont stockées qui permettent un verrouillage immédiat sur un signal GNSS une fois que les données sont chargées de nouveau dans le NCO.

13. Récepteur GNSS selon l'une quelconque des revendications 1 à 12, dans lequel le système de récepteur comprend une unité de commande qui est configurée pour extraire des états du NCO et stocker les états dans une mémoire.

14. Récepteur GNSS selon la revendication 13, dans lequel une unité de commande est configurée pour extraire des résultats d'autocorrélation de DLL individuels de l'unité de bande de base.

15. Récepteur GNSS selon l'une quelconque des revendications 1 à 14, dans lequel le système de récepteur reçoit des données NCO finales par le biais d'une unité de commande à partir d'un moyen externe permettant une réception directe des signaux souhaités sans une longue période d'acquisition.
